# EUROPÄISCHE PATENTANMELDUNG

(11) **EP 1 103 893 A2**
(43) Veröffentlichungstag der Anmeldung: **30.05.2001**
(21) Anmeldenummer: 00122513.5
(22) Anmeldetag: 14.10.2000
(51) Int. Cl.: G06F 11/14

(54) **Verfahren und Fernüberwachungssystem zur Fernüberwachung von Datenverarbeitungsanlagen**

(30) Priorität: 24.11.1999 DE 19956409
(71) Anmelder: Deutsche Telekom AG, 53113 Bonn (DE)
(72) Erfinder: Hillen, Lothar, 53925 Kall (DE); Thillmann, Rolf, 53879 Euskirchen (DE)

(57) **Zusammenfassung**

Die Erfindung betrifft ein Verfahren sowie ein Fernüberwachungssystem für Datenverarbeitungsanlagen mit einer Mehrzahl von Systemkomponenten, bei welchem der Status der Datenverarbeitungsanlage automatisch auf Störungen oder Fehler überwacht wird und automatisch ein Alarmierungsruf an eine dem Fehler zugeordnete Fachkraft abgesetzt wird, wenn eine Störung auftritt. Auf diese Weise können Ausfallzeiten der Anlage vermindert werden.

## Beschreibung

### Technisches Gebiet:

Die Erfindung betrifft ein Verfahren sowie ein Fernüberwachungssystem für Datenverarbeitungsanlagen mit einer Mehrzahl von Systemkomponenten, welche in einer Logdatei zyklisch ihren eigenen Zustand niederschreiben.

### Stand der Technik:

Anwendungen zur Informationsverarbeitung benötigen abhängig von ihrer Funktionalität, der Anzahl der Benutzer und der zur verarbeitenden Datenmenge unterschiedlich dimensionierte Hardwareplattformen. Größere Rechenanlagen bestehen aus einer Vielzahl von Systemkomponenten, wie hardwaremäßig mehrere Einzelrechner (Server), Speicherelemente, Bandstationen für die Datensicherung, Stromversorgung, Drucker, sonstige Peripheriegeräte, und sofwaremäßig Anwendungsprogramme, Datenbankmanagementsystem, Betriebssystem. Die Qualität und Akzeptanz einer Datenverarbeitungsanlage wird unter anderem durch ihre Verfügbarkeit und die Antwortzeit bestimmt. Während für den Betrieb, die Sicherheit und Überwachung eines Personalcomputers (PC) noch der Benutzer selbst ausreicht, ist das bei Großrechnern oder Computernetzwerken nicht mehr der Fall.

Um hier eine hohe Güte der Gesamtanlage zu gewährleisten, wird daher üblicherweise für den Betrieb, das Beobachten und für die grobe Störungsbeseitigung einer Datenverarbeitungsanlage eine separate Kräftegruppe (Operating) bereitgestellt. In der Regel wird an mehreren Bildschirmen der Zustand der Anlage dargestellt, wie er sich aus den von den einzelnen Systemkomponenten selbst in Logdateien niedergelegten Daten ergibt. Bei einer Abweichung von einem Soll-Zustand wird eine Fehlermeldung ausgegeben, auf die der Operator reagieren kann, indem er selbst in das System eingreift oder einen weiteren Fachmann mit Spezialkenntnissen für das betreffende Problem benachrichtigt.

Die Gruppe Operating arbeitet bei Unternehmen, bei welchen eine voll funktionsfähige Datenverarbeitungsanlage unentbehrlich ist, in der Regel im Dreischichtbetrieb. Zur Erhöhung der Überwachungssicherheit sind außerhalb der normalen Betriebszeiten wenigstens zwei Kräfte erforderlich. Neben der Gruppe Operating gibt es des weiteren Fachkräfte mit Spezialkenntnissen bezüglich der einzelnen Systemkomponenten. Sie sind für die Pflege, Wartung und Störungsbeseitigung im Speziellen verantwortlich und sind in der Lage, auch komplexere Fehler zu beheben. Um eine hohe Verfügbarkeit bzw. geringstmögliche Ausfallzeiten der Datenverarbeitungsanlage zu gewährleisten und schnell und effizient auf Störungen reagieren zu können, müssen auch die Spezialkräfte rund um die Uhr schnell erreichbar sein. Dieses ist in der Praxis in der Regel, insbesondere außerhalb der gewöhnlichen Betriebszeiten, nicht der Fall und führt zu einer Verzögerung in der Fehlerbehebung.

### Technische Aufgabe:

Der Erfindung liegt daher die Aufgabe zugrunde, ein Überwachungssystem für Datenverarbeitungsanlagen zur Verfügung zu stellen, bei welchem die genannten Nachteile nicht auftreten, automatisch alle Systemkomponenten überwacht werden und im Störungsfall gezielt eine befugte Kraft herbeigerufen wird.

### Offenbarung der Erfindung und deren Vorteile:

Die Aufgabe wird gelöst durch ein Verfahren zur Fernüberwachung von Datenverarbeitungsanlagen mit einer Mehrzahl von Systemkomponenten, welche in einer Logdatei zyklisch ihren eigenen Zustand niederschreiben, bei welchem Überwachungsroutinen die Logdateien automatisch auswerten und eine Fehlermeldung abgeben, falls Abweichungen von einem Normalzustand festgestellt werden, wobei die Fehlermeldung einen Fehlercode und/oder Informationen über die betreffende Systemkomponente enthält. Anhand des Fehlercodes und/oder der Informationen über die Systemkomponente wird die Fehlermeldung einem ersten Bearbeiter zugeordnet; dieser ist zuvor in einer Tabelle als zuständig für die betreffende Systemkomponente und/oder die Fehlerart bestimmt worden. Schließlich wird eine Sendevorrichtung zur Absetzung eines Herbeirufsignals veranlaßt, wobei das Herbeirufsignal über Funk an einen mobilen Datenempfänger des Bearbeiters übertragen wird.

Die Aufgabe wird weiterhin gelöst durch ein Fernüberwachungssystem für Datenverarbeitungsanlagen, bei welchem Überwachungsroutinen die Logdateien automatisch auswerten und automatisch eine Fehlermeldung abgeben, falls Abweichungen von einem Normalzustand festgestellt werden, wobei die Fehlermeldung einen Fehlercode und/oder Informationen über die betreffende Systemkomponente enthält. Das Überwachungssystem enthält eine Systemsteuerung, die imstande ist, die Fehlermeldung einem ersten Bearbeiter zuzuordnen, sowie eine Sendevorrichtung, welche durch die Systemsteuerung zur Absetzung eines Herbeirufsignals veranlaßbar ist, wobei das Herbeirufsignal über Funk an einen mobilen Datenempfänger des Bearbeiters übertragen wird.

Anhand des Fehlercodes, der auf den Empfänger übertragen wird, kann der Bearbeiter Dringlichkeit und Herkunft der Störung erkennen und entsprechend handeln.

Der mobile Datenempfänger ist vorzugsweise ein Textdatenempfänger, an welchen über ein Telefonnetz Daten übertragbar und dort darstellbar sind. Als Datenempfänger kann auch ein Mobiltelefon verwendet werden. In diesem Fall werden als Herbeirufsignal entweder Textdaten oder Sprachdaten, die beispielsweise von einem Sprachsynthetisator automatisch erzeugt wurden, übertragen.

Die Erfindung bietet folgende Vorteile: Es ist kein Personal mehr erforderlich, welches Bildschirme bewachen muß, um beim Erscheinen einer Fehlermeldung reagieren zu können. Stattdessen meldet sich das System im Störungsfall selbsttätig bei einem zuvor als kompetent eingestuften Bearbeiter, was optisch oder akustisch geschehen kann. Außerhalb der normalen Betriebszeiten ist kein zusätzliches Personal erforderlich. Der Betrieb der Datenverarbeitungsanlage kann somit im Einschichtbetrieb abgewickelt werden. Eine Allroundkraft, die bezüglich aller Komponenten sachverständig ist, ist nicht erforderlich. Insgesamt können Störungen schneller und effizienter beseitigt werden, da nicht erst ein Operator versucht, einen Fehler zu beheben, sondern eine Spezialkraft unmittelbar mit der Störungsbeseitigung beschäftigt werden kann.

Vorzugsweise wird ein weiteres Herbeirufsignal an einen weiteren Bearbeiter abgesetzt, wenn der erste Bearbeiter auf das Herbeirufsignal innerhalb eines vorbestimmten Zeitintervalls nicht reagiert, indem er auf die Datenverarbeitungsanlage zugreift, z.B. sich einloggt.

Im folgenden wird die Erfindung und deren Vorteile beispielhaft beschrieben:

Für die eingesetzten und zu überwachenden Bestandteile bzw. Systemkomponenten der Datenverarbeitungsanlage werden Klassen gebildet, z.B. Rechner, Drucker, Stromversorgung, Betriebssystem, Anwendungsprogramme. Diese Klassen werden Bearbeitern zugeordnet, die für die Betreuung der Komponenten ausgebildet und verantwortlich sind. Zu jedem Bearbeiter ist vorzugsweise die Anzahl der Einsätze innerhalb eines zurückliegenden Zeitintervalls notiert. Dieser Parameter dient bei zwei oder mehr Bearbeitern pro Klasse als Entscheidungskriterium, welcher der Bearbeiter zuerst gerufen wird. Zu jeder Klasse gibt es des weiteren einen oder mehrere Fehlercodes. Schließlich wird in einer Urlaubstabelle festgelegt, welche Bearbeiter grundsätzlich erreichbar sind.

In festgelegten Zyklen laufen die Prüfprogramme, die den Zustand der Systemkomponenten abfragen, indem sie die entsprechenden Logdateien auswerten. Stellt eine der Prüfroutinen einen Fehler fest, so wird anhand der Klasse derjenige Bearbeiter ausgewählt und alarmiert, der dieser Klasse zugeordnet ist. In vorbestimmtem zeitlichen Abstand, z.B. alle 5 Minuten, wird ein Anruf an diesen Bearbeiter abgesetzt. Die Alarmierung wird deaktiviert, indem sich der Bearbeiter rückmeldet, insbesondere in das System einloggt. Hat sich der erste Bearbeiter nach einer vorbestimmten Anzahl Rufversuche nicht gemeldet, wird ein Anruf an einen weiteren Bearbeiter abgesetzt, der vorzugsweise der gleichen Systemkomponenten-Klasse zugeordnet ist. Es werden stets nur diejenigen Bearbeiter angerufen, die in der Urlaubstabelle als erreichbar eingetragen sind. Auch dadurch wird keine unnötige Zeit verbraucht. Die Alarmierung wird beendet, wenn sich ein Bearbeiter im System einloggt und die Alarmierung bestätigt. Damit wird die Zahl der Einsätze dieses Bearbeiters um eins erhöht.

Der Ausfall einer Systemkomponente darf nicht zur Folge haben, daß auch der Herbeiruf ausfällt, weil das Überwachungssystem gerade auf der fehlerhaften Systemkomponente installiert ist. Vorzugsweise ist das Fernüberwachungssystem daher so aufgebaut, daß alle seine Einheiten doppelt vorhanden sind. Beispielsweise werden bei Ausfall der Anwendungssoftware die Fehlermeldungen an das Entwicklungssytem geschickt, welches dann den Herbeiruf steuert. Um den eigentlichen Herbeiruf absetzen zu können, sind vorzugsweise Modems vorhanden, welche zur Erhöhung der Ausfallsicherheit an zwei Rechnern angeschlossen sind.

Kurzbeschreibung der Zeichnung, in der zeigen:
- Figur 1: eine schematische Darstellung des Verfahrensablaufs und
- Figur 2: ein Beispiel für ein Fernüberwachungssystem zur Überwachung der Funktionsfähigkeit einer Datenverarbeitungsanlage, bestehend aus netzwerkmäßig miteinander verbundenen UNIX-Servern.

### Bevorzugte Ausführungsform der Erfindung:

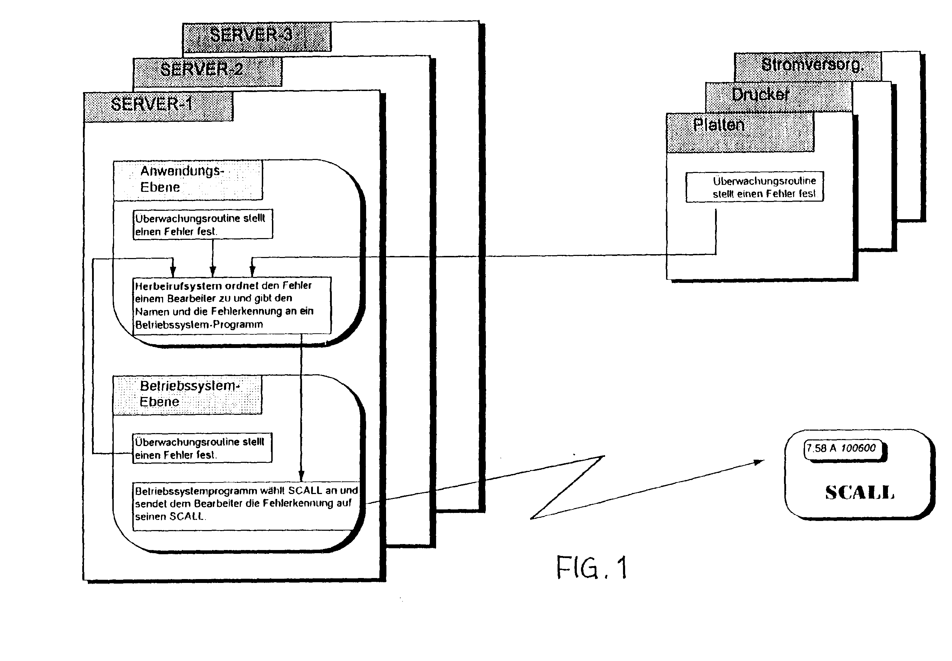

Figur 1 zeigt schematisch den Ablauf des erfindungsgemäßen Verfahrens sowie die betroffenen Systemkomponenten. Die Datenverarbeitungsanlage besteht in diesem Beispiel aus drei Servern, die die Hauptrechenleistung bereitstellen, sowie Peripheriekomponenten, wie Speicherplatten, Drucker und Stromversorgung. Sowohl in den Peripheriekomponenten als auch auf den Servern in der Anwendungs- und in der Betriebssystemebene sind Überwachungsroutinen installiert, welche Fehler bzw. Störungen im Betriebsablauf festzustellen imstande sind. Die Überwachungsroutinen erzeugten Fehlermeldungen, welche an ein Herbeirufsystem übertragen werden. Um die Störunanfälligkeit der Fernüberwachungssystems zu erhöhen, ist auf jedem der Server ein solches Herbeirufsystem vorgesehen, welches insbesondere in der Anwendungsebene installiert ist. Das Herbeirufsystem ordnet den Fehler einem Bearbeiter zu und gibt den Namen bzw. eine Kennung des Bearbeiters mit der Fehlerkennung an ein Betriebssystemprogramm. Dieses wählt ein mobiles Datenempfangsgerät, beispielsweise SCALL, des ausgewählten Bearbeiters an und sendet die Fehlerkennung auf dessen Textausgabeeinheit.

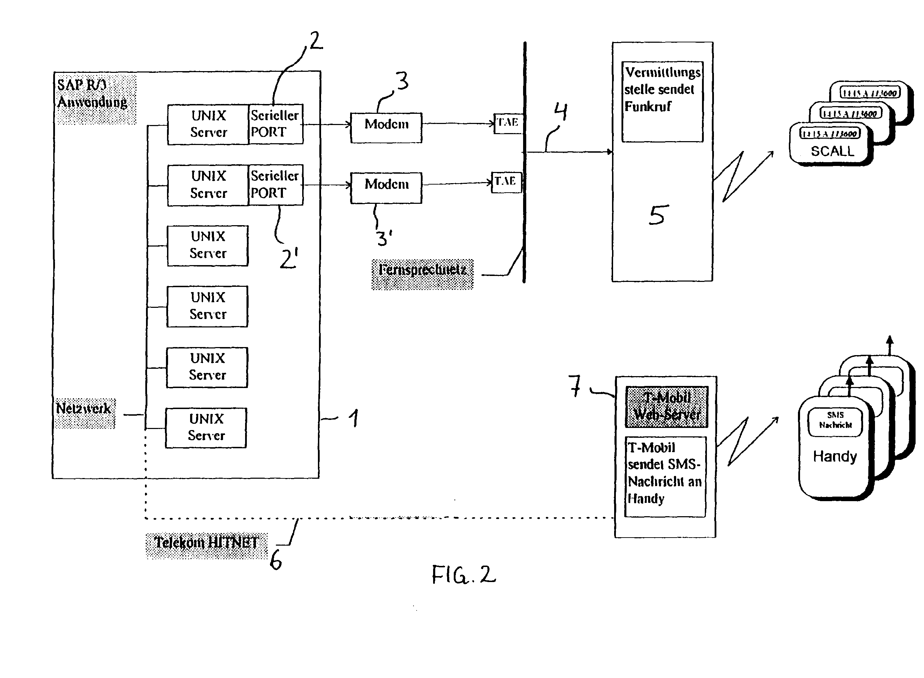

Figur 2 zeigt ein Beispiel für ein erfindungsgemäßes Fernüberwachungssystem zur Überwachung der Funktionsfähigkeit einer Datenverarbeitungsanlage 1, bestehend aus netzwerkmäßig miteinander verbundenen UNIX-Servern. Die Datenverarbeitungsanlage 1 ist über zwei serielle Ports 2, 2' mit Modems 3 bzw. 3' verbunden, wodurch eine Sendevorrichtung realisiert wird, die Rufe über das Fernsprech- bzw. Telefonfestnetz 4 abzusetzen imstande ist. Für die Absetzung des Herbeirufs sind Modems 3, 3' vorhanden, welche zur Erhöhung der Ausfallsicherheit an zwei Rechnern/Servern angeschlossen sind. Vorzugsweise wird der Herbeiruf dabei alternierend auf die beiden Server verteilt. Im Fehlerfalle wird ein Herbeiruf erzeugt und über das Fernsprechnetz 4 an eine Vermittlungsstelle 5 des Fernsprechnetzes 4 übertragen. Diese sendet in an sich bekannter Weise einen Funkruf an mobile Datenempfangsgeräte, z.B. sogenannte SCALL-Geräte, der dort als Textnachricht ausgegeben wird. Allgemein weist somit die Sendevorrichtung wenigstens ein Modem auf.

Alternativ oder zusätzlich erfolgt die Übertragung des Herbeirufs über eine Datenleitung 6, z.B. über das HITNET, zu einem Server 7 des Internets (Web-Server). Der Web-Server sendet eine Textnachricht an ein Mobiltelefon, beispielsweise im SMS (short message system) - Format.

### Gewerbliche Anwendbarkeit:

Die Erfindung läßt sich insbesondere in Unternehmen mit hohem Datenverarbeitungsaufwand vorteilhaft gewerblich einsetzen, da durch das automatische Alarmieren einer Fachkraft eine schnelle und effiziente Fehlerbeseitigung und damit eine Verkürzung von Ausfallzeiten ermöglicht wird. Die Nützlichkeit der Erfindung besteht darin, dass der Ausfall einer Systemkomponente nicht zur Folge haben, daß auch der Herbeiruf ausfällt. Vorzugsweise sind alle Einheiten des Fernüberwachungssystems doppelt vorhanden.

## Patentansprüche

1. Verfahren zur Fernüberwachung von Datenverarbeitungsanlagen mit einer Mehrzahl von Systemkomponenten, welche in einer Logdatei zyklisch ihren eigenen Zustand niederschreiben, gekennzeichnet durch,
a) Überwachungsroutinen, welche die Logdateien automatisch auswerten und eine Fehlermeldung abgeben, falls Abweichungen von einem Normalzustand festgestellt werden,
b) wobei die Fehlermeldung einen Fehlercode und/oder Informationen über die betreffende Systemkomponente enthält;
c) die Fehlermeldung wird anhand des Fehlercodes und/oder der Informationen über die Systemkomponente einem ersten Bearbeiter zugeordnet;
d) eine Sendevorrichtung wird zur Absetzung eines Herbeirufsignals veranlaßt,
e) wobei das Herbeirufsignal über Funk an einen mobilen Datenempfänger des Bearbeiters übertragen wird.

2. Verfahren nach Anspruch 1, dadurch gekennzeichnet,
daß ein weiteres Herbeirufsignal an einen weiteren Bearbeiter abgesetzt wird, wenn der erste Bearbeiter auf das Herbeirufsignal innerhalb eines vorbestimmten Zeitintervalls nicht reagiert, indem er auf die Datenverarbeitungsanlage zugreift.

3. Verfahren nach Anspruch 1 oder 2, dadurch gekennzeichnet,
daß das Herbeirufsignal einen Fehlercode und/oder Informationen über die betreffende Systemkomponente enthält, wobei diese Daten auf einem Display des mobilen Datenempfängers des Bearbeiters ausgegeben werden.

4. Fernüberwachungssystem für Datenverarbeitungsanlagen mit einer Mehrzahl von Systemkomponenten, welche in einer Logdatei zyklisch ihren eigenen Zustand niederschreiben, gekennzeichnet durch,
a) Überwachungsroutinen, welche die Logdateien automatisch auswerten und eine Fehlermeldung abgeben, falls Abweichungen von einem Normalzustand festgestellt werden, wobei die Fehlermeldung einen Fehlercode und/oder Informationen über die betreffende Systemkomponente enthält;
b) eine Systemsteuerung, die imstande ist, die Fehlermeldung einem ersten Bearbeiter zuzuordnen;
c) eine Sendevorrichtung, welche durch die Systemsteuerung zur Absetzung eines Herbeirufsignals veranlaßbar ist, wobei das Herbeirufsignal über Funk an einen mobilen Datenempfänger des Bearbeiters übertragen wird.

5. Fernüberwachungssystem nach Anspruch 4, dadurch gekennzeichnet,
daß seine Einheiten innerhalb der Datenverarbeitungsanlage wenigstens doppelt vorhanden sind.

6. Fernüberwachungssystem nach Anspruch 4 oder 5, dadurch gekennzeichnet,
daß die Sendevorrichtung ein Modem umfaßt.
